# EUROPEAN PATENT SPECIFICATION

(11) **EP 2 514 190 B1**
(45) Date of publication and mention of the grant of the patent: **19.08.2015**
(21) Application number: 10778624.6
(22) Date of filing: 09.11.2010
(51) Int. Cl.: H04N 1/00, H04N 1/32

(54) **APPARATUS FOR IMAGE CROPPING**
GERÄT ZUR BILDABSCHNEIDUNG
APPAREIL DE RECADRAGE D'IMAGE

(30) Priority: 18.12.2009 US 641717
(43) Date of publication of application: 24.10.2012
(73) Proprietor: Sony Ericsson Mobile Communications AB, 221 88 Lund (SE)
(72) Inventor: JOHANSSON, Håkan, 224 74 Lund (SE)
(74) Representative: Banzer, Hans-Jörg
(86) International application number: PCT/EP2010/067101
(87) International publication number: WO 2011/072955

(56) References cited:
- US-A1- 2002 015 098
- US-A1- 2006 001 650
- US-A1- 2007 024 736
- US-A1- 2009 051 946

## Description

### Technical Field

The present invention relates to generation of image data in a portable electronic device.

### Background

Portable electronic devices, such mobile phones, have gained an increased popularity over the recent years. Portable electronic devices are sometimes equipped with one or more cameras that can be used for taking photos or video sequences, which can be stored in the portable electronic devices for use therein, and sometimes also be sent with various types of messages, such as email or MMS (Multimedia Messaging Service) messages. To further improve the usability and/or flexibility of such a portable electronic device, it would be desirable to provide further ways for a user to control generation of image data by means of the camera of the portable electronic device.

### Summary

According to an aspect, there is provided a portable electronic device. The portable electronic device comprises a camera unit adapted to capture images of an object on a first.side of the portable electronic device. Furthermore, the portable electronic device comprises a memory unit for storing data. Moreover, the portable electronic device comprises a control unit. The control unit is adapted to analyze images captured by the camera unit in order to trace movement of a pointer device, said movement forming a selection path. Furthermore, the control unit is adapted to determine when said selection path is closed thereby forming a selection area and, in response thereto, generate image data representing the part of an image of the object captured by the camera unit that is within the selection area. Moreover, the control unit is adapted to save said image data to the memory unit.

The portable electronic device may further comprise a projection unit adapted to project light forming an image-analysis area, defining an area in which image analysis is to take place, on said object.

The control unit may be adapted to control the projection unit to project one or more image items, each representing a function related to the image data that is executable in the portable electronic device. Furthermore, the control unit may be adapted to analyze images captured by the camera unit within the projected image items in order to detect an activation action performed by said pointer device within one of the projected image items. Moreover, the control unit may be adapted to, in response to detecting such an activation action performed by said pointer device within one of the projected image items, issue execution of the function represented by said one of the projected image items. The activation action may e.g. be presence of the pointer device within the projected image item during a predetermined amount of time. Alternatively, the activation action may e.g. be movement of the pointer device according to a predetermined pattern within the projected image item. The functions associated with the projected image items may e.g. include one or more of:
- composing a new electronic message comprising the image data;
- composing a new electronic document comprising the image data;
- pasting the image data into a data item of a pre-selected application of the portable electronic device; and
- performing image processing or editing on the image data.

The portable electronic device may be provided with a clipboard functionality for storing clipboard data objects that can be pasted into an electronic document in an application executed on the portable electronic device. The control unit may be adapted to save said image data as a clipboard object.

The pointer device may comprise a passive visual marker for facilitating the detection of the pointer device. The control unit may be adapted to detect said passive visual marker in images captured by the camera unit. Alternatively or additionally, the pointer device may comprise a source of electromagnetic radiation for facilitating detection of the pointer device. The control unit may be adapted to detect the presence of said source of electromagnetic radiation in images captured by the camera unit.

The pointer device may be a stylus or similar device. Alternatively, the pointer device may be a human body part, such as but not limited to a finger.

The portable electronic device may be a mobile phone, but is not limited thereto.

Further embodiments of the invention are defined in the dependent claims.

It should be emphasized that the term "comprises/comprising" when used in this specification is taken to specify the presence of stated features, integers, steps, or components, but docs not preclude the presence or addition of one or more other features, integers, steps, components, or groups thereof.

### Brief Description of the Drawings

Further objects, features and advantages of embodiments of the invention will appear from the following detailed description, reference being made to the accompanying drawings, in which:
Figs. 1-2 show views of a portable electronic device according to embodiments of the present invention;
Fig. 3 is a block diagram of a portable electronic device according to an embodiment of the present invention;
Figs. 4-6 illustrate examples of use of a portable electronic device according to embodiments of the present invention; and
Figs. 7-10 illustrate examples of pointer devices according to embodiments of the present invention.

### Detailed Description

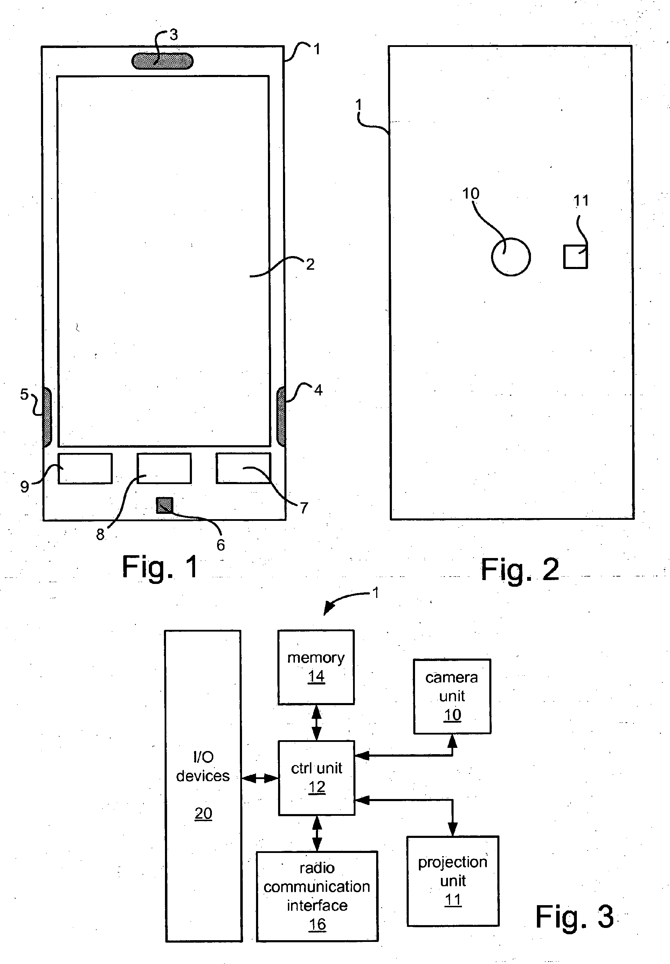

Fig. 1 is a view ("front side view") of a portable electronic device 1 according to an embodiment of the present invention. The portable electronic device 1 may e.g. be a mobile phone. The portable electronic device 1 may include one or more input and/or output devices, in the following collectively referred to as I/O devices. As illustrated in Fig. 1, such I/O devices may include, but is not limited to, one or more displays 2 for visualization of text and/or images, one or more speakers 3-5 for audio output, one or more microphones 6 for audio input, and/or one or more physical keys, or buttons, 6-9 for user interaction. The display 2 may be a touch screen that enables user interaction as is known in the art.

Fig. 2 is another view ("backside view") of the portable electronic device 1 according to the embodiment. The portable electronic device 1 comprises a camera unit 10 and a projection unit 11, further described below in the context of examples and embodiments.

Fig. 3 is a block diagram of the portable electronic device 1 according to an embodiment of the present invention. According to the embodiment, the portable electronic device 1 comprises a control unit 12. Furthermore, the portable electronic device 1 comprises memory unit 14 for storing data. The memory unit 14 may include non-volatile memory, such as flash memory or the like, volatile memory, such as random access memory (RAM) or the like, or a combination thereof. Additionally or alternatively, the memory unit 14 may comprise an interface for connecting an external memory, such as a flash memory card or the like, to the portable electronic device. Furthermore, the portable electronic device 1 may comprise one or more radio communication interfaces 16 for providing radio communication in accordance with various wireless communication technologies. Non-limiting examples of such wireless communication technologies include cellular communication technologies such as GSM (Global System for Mobile Communication) and UMTS (Universal Mobile Telecommunications System), WLAN (Wireless Local-Area Network) technology in accordance with various IEEE 802.11 standards, and short-range wireless communication technologies such as Bluetooth. Such a radio communication interface 16 may e.g. comprise one or more antennas, power amplifiers, low-noise amplifiers (LNAs), mixers, data converters, baseband circuits, and/or other circuitry needed for providing the desired radio communication. The design of such radio communication interfaces is well known in the art and is therefore not further described herein. Various I/O devices, such as the devices 2-9 (Fig. 1), are collectively represented with a block 20 in Fig. 3. In the embodiment illustrated in Fig. 3, the control unit 12 is operatively connected to the camera unit 10, the projection unit 11, and the memory unit 14 for controlling and/or exchanging data with these units of the portable electronic device 1. Furthermore, the control unit 12 may be operatively connected to the radio communication interface 16, and the I/O devices 20 for controlling and/or exchanging data with these units of the portable electronic device 1.

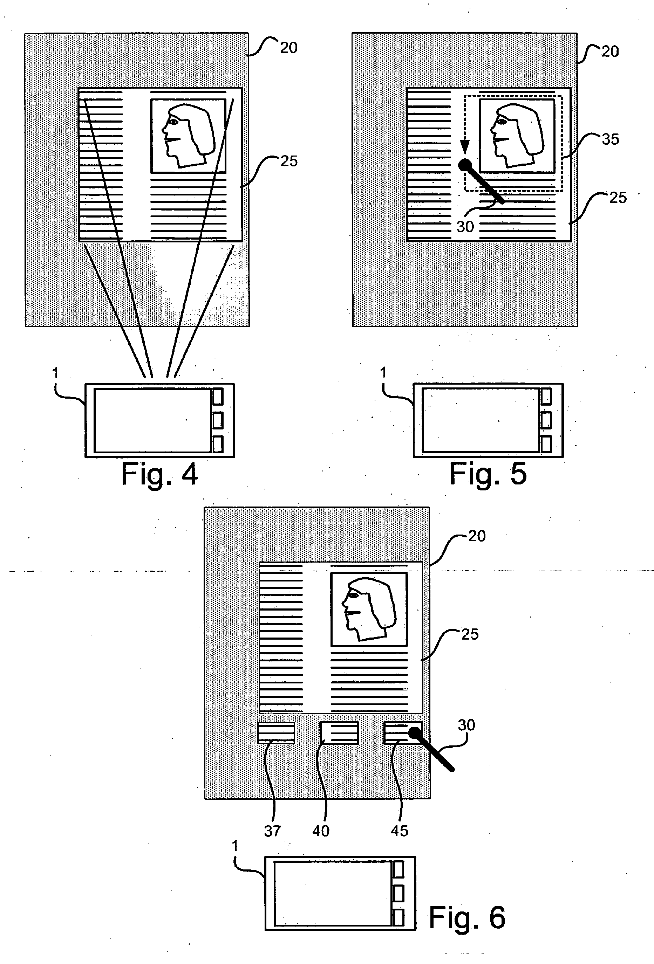

According to embodiments of the present invention, the camera unit 10 is adapted to capture images of an object located on a first side of the portable electronic device 1. For example, the camera unit 10 may be adapted to, in an activated state, capture images with a regular interval. For example, the camera unit 10 may be adapted to capture images somewhere in the range of 5 - 60 images per second, but the invention is not limited thereto. Fig. 4 illustrates an example where embodiments of the present invention can be used. In this example, object (referred to with reference sign 20) is a newspaper. However, a newspaper is only an example of an object 20 and the invention is not limited thereto. Furthermore, according to embodiments of the present invention, the projection unit 11 is adapted to project light forming an image-analysis area 25 on the object 20, which is also illustrated in Fig. 4. The image analysis area 25 defines an area in which image analysis is to take place, which is further described below. Moreover, according to embodiments of the present invention, the control unit 12 is adapted to analyze images captured by the camera unit 10 within the image-analysis area 25 in order to trace movement of a pointer device 30 within the image-analysis area 25, as illustrated in Fig. 5. Said movement forms a selection path 35. The control unit 12 is further adapted to determine when said selection path 35 is closed thereby forming a selection area (i.e. the area enclosed by the selection path 35). For example, the control unit 12 may be adapted to determine that the selection path 35 is closed when a current end point of the selection path (i.e. current position of the pointer device 30) is within a threshold distance from the starting point of the selection path 35. The threshold distance may e.g. be a predetermined or user configurable distance. The threshold distance need not necessarily be a physical distance in the "real world", but may e.g. be measured in the captured images in terms of e.g. number of pixels. Such a threshold distance may consequently correspond to different physical distances depending on the distance between the camera unit 10 and the pointer device 30, and possibly also on a zoom level of the camera unit 10. The starting point of the selection path may e.g. be determined by the control unit 12 as the position of the pointer device 30 at a particular point in time, such as the point time when a user of the portable electronic device 1 performs an action for commencing selection, e.g. by pressing a button or the like on the portable electronic device 1, or a predetermined or user configurable amount of time after the point in time when the user performs such an action. Alternatively, an action for commencing selection may be performance of a predetermined gesture or sequence of gestures with the pointer device 30. The control unit 12 may thus be adapted to recognize such a gesture or sequence of gestures in images captured by the camera unit 10.

Moreover, the control unit is adapted to, in response to detecting that the selection path 35 is closed, generate image data representing the part of an image of the object 20 captured by the camera unit 10 that is within the selection area, and save the image data to the memory unit 14. For example, the image data may be saved for temporary storage, such as in a RAM of the memory unit 14, and/or for more permanent storage, e.g. in an internal flash memory of the memory unit 14 or in an external flash memory card connected to the portable electronic device 1 via an interface of the memory unit 14. For example, said image captured by the camera unit 10, from which the image data is generated, may be selected as an image captured a predetermined or user-configurable amount of time after detection of the closure of the selection path 35. Thereby, it is possible to avoid having the pointer device 30 obstructing the image within the selection area, e.g. since a person maneuvring the pointer device is given a certain amount of time to remove the pointer device from the selection area. Alternatively, image analysis on images captured by the camera unit 10 may be employed to determine an image for which the pointer device 30 has been removed from the selection area. This image may be selected as the image from which said image data is to be generated. Further alternatively, said image captured by the camera unit 10, from which the image data is generated, may be selected as an image captured a predetermined or user-configurable amount of time before tracing of the pointer device 30 for generating the selection path 35 is commenced by the control unit 12. Another alternative is to generate the image data from a superposition of a plurality of images captured by the camera unit 10, whereby the pointer device 30 may be more or less faded out (since it is not held still but moved around for generating the selection path 35).

Optionally, the control unit 12 may be adapted to control the projection unit 11 to project the selection path 35 and/or the selection area onto the object 20. Alternatively or additionally, the control unit 12 may optionally be adapted to control the display 2 to display the selection path 35 and/or the selection area superpositioned onto an image captured by the camera unit 10.

With the embodiments described above, a user of the portable electronic device 1 is provided with the possibility of selecting (for cutting, copying, etc) part of an image by simply defining the selection area, with the pointer device 30, directly on (or in front of) the physical object 20. This provides an enhanced flexibility of using the camera functionality of the portable electronic device 1. The image-analysis area projected by the projection unit provides the user with guidance regarding where the portable electronic device is currently "looking", e.g. without having to look on the display 2 of the portable electronic device 1. However, although advantageous, such guidance is not indispensible for defining the selection area, and in some embodiments, the projection unit 11 may be omitted. Alternatively, the projection unit 11 may be provided in an external plug-in unit (not shown) connectable to the portable electronic device 1. According to some embodiments, the projection unit 11 is or comprises a simple light bulb, light-emitting diode (LED), or other similar light source. The light source may have a particular color selected to make the image-analysis area easily recognizable. According to other embodiments, a more advanced miniature projector of a suitable size for inclusion in the portable electronic device 1 may be used as the projection unit 11.

The portable electronic device 1 may e.g. be provided with a clipboard functionality for storing clipboard data objects that can be pasted into an electronic document in an application executed on the portable electronic device 1. Such an application may e.g. be a word processor, image editor, or message editor. The corresponding electronic document may e.g. be a word-processing document, an electronic image document, or an electronic message (e.g. an email or an MMS (Multimedia Messaging Service) message), respectively. The control unit 12 may be adapted to save said image data as a clipboard object to the memory unit 14.

Besides from defining the selection area, the pointer device 30 may in some embodiments be utilized for performing various other task directly on or in front of the physical object 20. An example is illustrated in Fig. 6. The control unit 12 may be adapted to control the projection unit 11 to project one or more image items 37, 40, 45. Each image item 37, 40, 45 represents a function that is executable on the portable electronic device 1. The function may be related to the image data representing the part of an image of the object 20 captured by the camera unit 10 that is within the selection area. Such functions may include, but are not limited to, composing a new electronic message comprising the image data, composing a new electronic document comprising the image data, pasting the image data into a data item of a pre-selected application of the portable electronic device 1, and performing image processing or editing of the image data (e.g. rotation, read-eye removal, free-hand drawing using the pointer device 30 within the selection area, etc.). Hence, said image items 37, 40, 45 may represent menu items, toolbox buttons, or other similar user-interaction items of a graphical user interface. The control unit 12 may be adapted to analyze images captured by the camera unit 10 within the projected image items 37, 40, 45 in order to detect an activation action performed by the pointer device 30 within one of the projected image items 37, 40, 45. Furthermore, the control unit 12 may be adapted to, in response to detecting such an activation action performed by said pointer device 30 within one of the projected image items 37, 40, 45, issue execution of the function represented by said one of the projected image items 37, 40, 45. An activation action may e.g. be presence of the pointer device 30 within the projected image item 37, 40, 45 during a predetermined amount of time. Alternatively, an activation action may be movement of the pointer device 30 according to a predetermined pattern (e.g. a circle or a cross) within the projected image item 37, 40, 45.

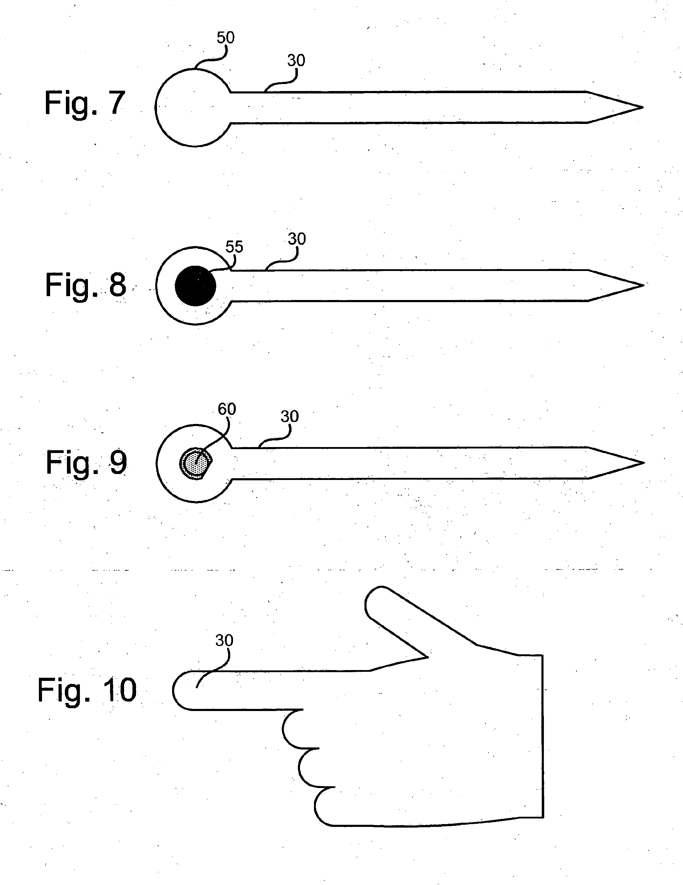

Figs. 7-10 illustrate various non-limiting embodiments of the pointer device 30. The pointer device may e.g. be a dedicated or custom-made pointer device for the portable electronic device 1, e.g. a stylus or the like. Examples of such pointer devices 30 are illustrated in Figs. 7-9. Note that the shapes of the pointer devices 30 in Figs. 7-9 are only examples, and the invention is not limited thereto. To facilitate the detection of the pointer device 30 by the control unit 12 in images captured by the camera unit 10, the pointer device 30 may comprises one or more passive visual markers. The control unit 12 may be adapted to detect such passive visual markers in images captured by the camera unit 10 for determining the current position of the pointer device 30. For example, as illustrated in Fig. 7, the pointer device may have a part 50 having a distinctive shape, such as a circular shape. Said distinctive shape may be such a passive visual marker. Alternatively or additionally, as illustrated in Fig. 8, the pointer device may have a portion 55 of its surface colored in a distinctive color. Said portion 55 may also be such a passive visual marker.

Further alternatively or additionally, the pointer device 30 may comprise a source 60 of electromagnetic radiation for facilitating detection of the pointer device 30. In Fig. 9, the source 60 of electromagnetic radiation is illustrated as a light-emitting diode (LED). However, other suitable sources, or "transmitters", of electromagnetic radiation may be used as well. The electromagnetic radiation should have wavelength for which a sensor of the camera unit 10 is sensitive. For example, the electromagnetic radiation may be visible light of a particular color, infrared light, etc, depending on the type of said sensor of the camera unit 10. The control unit 12 may be adapted to detect the presence of said source 60 electromagnetic in images captured by the camera unit 10 for determining the current position of the pointer device 30.

Alternatively, the pointer device 30 may be a human body part, such as a finger, as illustrated in Fig. 10. Hence, the control unit 12 may be adapted to detect the presence and current position of the finger (or other human body part) for tracing the selection path 35 by employing any suitable image-recognition algorithm. An advantage thereof is that no dedicated pointer device is needed, but the user can use his finger directly to define the selection area.

The present invention has been described above with reference to specific embodiments. However, other embodiments than the above described are possible within the scope of the invention. For example, above, the definition of a single selection area by means of the pointer device 30 is described. However, in other embodiments, one or more additional selection areas may subsequently be defined in the same way using the pointer device 30. Image data may be generated for each of these selection areas from the same image captured by camera unit 10 and saved to the memory unit 14, e.g. as multiple clipboard objects. Furthermore, the camera unit 10 (and projection unit 11) has been depicted in Fig. 2 on a particular side of the portable electronic device 1. However, the camera unit 10 (and projection unit 11) may be located on any side of the portable electronic device 1. The different features of the embodiments may be combined in other combinations than those described. The scope of the invention is only, limited by the appended patent claims.

## Claims

1. A portable electronic device comprising
a camera unit adapted to capture images of an object on a first side of the portable electronic device;
a memory unit for storing data;
a control unit adapted to
- analyze images captured by the camera unit in order to trace movement of a pointer device, said movement forming a selection path;
- determine when said selection path is closed thereby forming a selection area;
- in response thereto, generate image data representing the part of an image of the object captured by the camera unit that is within the selection area; and
- save said image data to the memory unit.

2. The portable electronic device according to claim 1, further comprising a projection unit adapted to project light forming an image-analysis area, defining an area in which image analysis is to take place, on said object.

3. The portable electronic device according to claim 2, wherein the control unit is further adapted to
- control the projection unit to project one or more image items, each representing a function related to the image data that is executable in the portable electronic device;
- analyze images captured by the camera unit within the projected image items in order to detect an activation action performed by said pointer device within one of the projected image items; and
- in response to detecting such an activation action performed by said pointer device within one of the projected image items, issue execution of the function represented by said one of the projected image items.

4. The portable electronic device according to claim 3, wherein the activation action is presence of the pointer device within the projected image item during a predetermined amount of time.

5. The portable electronic device according to claim 3, wherein the activation action is movement of the pointer device according to a predetermined pattern within the projected image item.

6. The portable electronic device according to any of the claims 3 - 5, wherein the functions associated with the projected image items include one or more of:
- composing a new electronic message comprising the image data;
- composing a new electronic document comprising the image data;
- pasting the image data into a data item of a pre-selected application of the portable electronic device; and
- performing image processing or editing on the image data.

7. The portable electronic device according to any preceding claim, wherein the portable electronic device is provided with a clipboard functionality for storing clipboard data objects that can be pasted into an electronic document in an application executed on the portable electronic device, and the control unit is adapted to save said image data as a clipboard object.

8. The portable electronic device according to any preceding claim, wherein the pointer device comprises a passive visual marker for facilitating the detection of the pointer device, and the control unit is adapted to detect said passive visual marker in images captured by the camera unit.

9. The portable electronic device according to any preceding claim, wherein the pointer device comprises a source of electromagnetic radiation for facilitating detection of the pointer device, and the control unit is adapted to detect the presence of said source of electromagnetic radiation in images captured by the camera unit.

10. The portable electronic device according to any preceding claim, wherein the pointer device is a stylus.

11. The portable electronic device according to any of the claims 1 - 7, wherein the pointer device is a human body part.

12. The portable electronic device according to claim 11, wherein the pointer device is a finger.

13. The portable electronic device according to any preceding claim, wherein the portable electronic device is a mobile phone.

## Patentansprüche

1. Tragbare elektronische Vorrichtung, umfassend
eine Kameraeinheit, welche ausgestaltet ist, Bilder von einem Objekt an einer ersten Seite der tragbaren elektronischen Vorrichtung zu erfassen;
eine Speichereinheit zum Speichern von Daten;
eine Steuereinheit, welche ausgestaltet ist,
- von der Kameraeinheit erfasste Bilder zu analysieren, um eine Bewegung einer Zeigervorrichtung zu verfolgen, wobei die Bewegung einen Auswahlpfad ausbildet;
- zu bestimmen, wenn der Auswahlpfad geschlossen ist, wodurch ein Auswahlbereich ausgebildet wird;
- abhängig davon Bilddaten zu erzeugen, welche den Teil eines Bildes des von der Kameraeinheit erfassten Objekts darstellen, welcher innerhalb des Auswahlbereichs ist; und
- die Bilddaten auf der Speichereinheit zu speichern.

2. Tragbare elektronische Vorrichtung nach Anspruch 1, ferner umfassend eine Projektionseinheit, welche ausgestaltet ist, Licht zu projizieren, welches einen Bildanalysebereich auf dem Objekt ausbildet, welcher einen Bereich definiert, in welchem die Bildanalyse stattfinden soll.

3. Tragbare elektronische Vorrichtung nach Anspruch 2, wobei die Steuereinheit ferner ausgestaltet ist,
- die Projektionseinheit zu steuern um ein oder mehrere Bildgegenstände zu projizieren, wobei jeder eine auf die Bilddaten bezogene Funktion darstellt, welche in der tragbaren elektronischen Vorrichtung ausführbar ist;
- von der Kameraeinheit erfasste Bilder innerhalb der projizierten Bildgegenstände zu analysieren, um einen Aktivierungsvorgang zu erfassen, welcher von der Zeigervorrichtung innerhalb eines der projizierten Bildgegenstände ausgeführt wird; und
- abhängig von einem Erfassen eines derartigen Aktivierungsvorgangs, welcher von der Zeigervorrichtung innerhalb eines der projizierten Bildgegenstände ausgeführt wird, ein Ausführen der Funktion zu veranlassen, welche von dem einen der projizierten Bildgegenstände dargestellt wird.

4. Tragbare elektronische Vorrichtung nach Anspruch 3, wobei der Aktivierungsvorgang ein Vorhandensein der Zeigervorrichtung innerhalb des projizierten Bildgegenstandes während einer vorbestimmten Zeitdauer ist.

5. Tragbare elektronische Vorrichtung nach Anspruch 3, wobei der Aktivierungsvorgang eine Bewegung der Zeigervorrichtung gemäß einem vorbestimmten Muster innerhalb des projizierten Bildgegenstandes ist.

6. Tragbare elektronische Vorrichtung nach einem der Ansprüche 3-5, wobei die Funktionen, welche den projizierten Bildgegenständen zugeordnet sind, eine oder mehrere einbeziehen von:
- Bilden einer neuen elektronischen Nachricht, welche die Bilddaten umfasst;
- Bilden eines neuen elektronischen Dokuments, welches die Bilddaten umfasst;
- Einsetzen der Bilddaten in einen Datengegenstand einer vorher ausgewählten Anwendung der tragbaren elektronischen Vorrichtung; und
- Ausführen einer Bildverarbeitung oder Bearbeitung auf den Bilddaten.

7. Tragbare elektronische Vorrichtung nach einem der vorhergehenden Ansprüche, wobei die tragbare elektronische Vorrichtung mit einer Zwischenablagefunktionalität zum Speichern von Zwischenablagedatenobjekten, welche in ein elektronisches Dokument in einer auf der tragbaren elektronischen Vorrichtung ausgeführten Anwendung eingesetzt werden können, versehen ist, und wobei die Steuereinheit ausgestaltet ist, die Bilddaten als ein Zwischenablageobjekt zu speichern.

8. Tragbare elektronische Vorrichtung nach einem der vorhergehenden Ansprüche, wobei die Zeigervorrichtung eine passive optische Markierung zum Ermöglichen der Erfassung der Zeigervorrichtung umfasst, und wobei die Steuereinheit ausgestaltet ist, die passive optische Markierung in von der Kameraeinheit erfassten Bildern zu erfassen.

9. Tragbare elektronische Vorrichtung nach einem der vorhergehenden Ansprüche, wobei die Zeigervorrichtung eine Quelle von elektromagnetischer Strahlung zum Ermöglichen einer Erfassung der Zeigervorrichtung umfasst, und wobei die Steuereinheit ausgestaltet ist, das Vorhandensein der Quelle von elektromagnetischer Strahlung in von der Kameraeinheit erfassten Bildern zu erfassen.

10. Tragbare elektronische Vorrichtung nach einem der vorhergehenden Ansprüche, wobei die Zeigervorrichtung ein Griffel ist.

11. Tragbare elektronische Vorrichtung nach einem der Ansprüche 1-7, wobei die Zeigervorrichtung ein menschliches Körperteil ist.

12. Tragbare elektronische Vorrichtung nach Anspruch 11, wobei die Zeigervorrichtung ein Finger ist.

13. Tragbare elektronische Vorrichtung nach einem der vorhergehenden Ansprüche, wobei die tragbare elektronische Vorrichtung ein Mobiltelefon ist.

## Revendications

1. Dispositif électronique portatif comprenant :
une unité de prise de vue apte à prendre des images d'un objet sur un premier côté du dispositif électronique portatif ;
une unité de mémoire destinée à stocker des données ;
une unité de commande apte :
- à analyser des images prises par l'unité de prise de vue afin de suivre le déplacement d'un dispositif de pointage, ledit déplacement formant un chemin de sélection ;
- à déterminer lorsque ledit chemin de sélection est fermé en formant ainsi une zone de sélection ;
- en réponse à cela, à engendrer des données d'image représentant la partie d'une image de l'objet prise par l'unité de prise de vue qui est à l'intérieur de la zone de sélection ; et
- à sauvegarder lesdites données d'image dans l'unité de mémoire.

2. Dispositif électronique portatif selon la revendication 1, comprenant en outre une unité de projection apte à projeter de la lumière formant, sur ledit objet, une zone d'analyse d'image, définissant une zone dans laquelle doit se faire une analyse d'image.

3. Dispositif électronique portatif selon la revendication 2, dans lequel l'unité de commande est en outre apte :
- à commander l'unité de projection pour projeter un ou plusieurs éléments d'image, chacun représentant une fonction relative aux données d'image qui est exécutable dans le dispositif électronique portatif ;
- à analyser des images prises par l'unité de prise de vue à l'intérieur des éléments d'image projetés afin de détecter une action d'activation effectuée par ledit dispositif de pointage à l'intérieur de l'un des éléments d'image projetés ; et
- en réponse à la détection d'une telle action d'activation effectuée par ledit dispositif de pointage à l'intérieur d'un des éléments d'image projetés, à lancer l'exécution de la fonction représentée par ledit un des éléments d'image projetés.

4. Dispositif électronique portatif selon la revendication 3, dans lequel l'action d'activation est la présence du dispositif de pointage à l'intérieur de l'élément d'image projeté pendant une longueur prédéterminée de temps.

5. Dispositif électronique portatif selon la revendication 3, dans lequel l'action d'activation est un déplacement du dispositif de pointage suivant un motif prédéterminé à l'intérieur de l'élément d'image projeté.

6. Dispositif électronique portatif selon l'une quelconque des revendications 3 à 5, dans lequel les fonctions associées aux éléments d'image projetés incluent une ou plusieurs :
- de la composition d'un nouveau message électronique comprenant les données d'image ;
- de la composition d'un nouveau document électronique comprenant les données d'image ;
- du collage des données d'image dans un élément de données d'une application choisie préalablement du dispositif électronique portatif ; et
- de l'exécution, sur les données d'image, d'un traitement ou d'une mise en forme d'image.

7. Dispositif électronique portatif selon l'une quelconque des revendications précédentes, dans lequel le dispositif électronique portatif est pourvu d'une fonctionnalité de presse-papiers destinée à mémoriser des objets de données de presse-papiers qui peuvent être collées dans un document électronique dans une application exécutée sur le dispositif électronique portatif, et dans lequel l'unité de commande est apte à sauvegarder lesdites données d'image en tant qu'objet de presse-papiers.

8. Dispositif électronique portatif selon l'une quelconque des revendications précédentes, dans lequel le dispositif de pointage comprend un marqueur visuel passif destiné à faciliter la détection du dispositif de pointage, et dans lequel l'unité de commande est apte à détecter ledit marqueur visuel passif dans des images prises par l'unité de prise de vue.

9. Dispositif électronique portatif selon l'une quelconque des revendications précédentes, dans lequel le dispositif de pointage comprend une source de rayonnement électromagnétique destinée à faciliter la détection du dispositif de pointage, et dans lequel l'unité de commande est apte à détecter la présence de ladite source de rayonnement électromagnétique dans des images prises par l'unité de prise de vue.

10. Dispositif électronique portatif selon l'une quelconque des revendications précédentes, dans lequel le dispositif de pointage est un stylet.

11. Dispositif électronique portatif selon l'une quelconque des revendications 1 à 7, dans lequel le dispositif de pointage est une partie du corps humain.

12. Dispositif électronique portatif selon la revendication 11, dans lequel le dispositif de pointage est un doigt.

13. Dispositif électronique portatif selon l'une quelconque des revendications précédentes, dans lequel le dispositif électronique portatif est un téléphone mobile.
